# EUROPEAN PATENT APPLICATION

(11) **EP 1 628 475 A1**
(43) Date of publication of application: **22.02.2006**
(21) Application number: 05016616.4
(22) Date of filing: 29.07.2005
(51) Int. Cl.: H04N 5/66, H04N 7/22

(54) **Digital video signal interface module**

(30) Priority: 05.08.2004 JP 2004228974
(71) Applicant: Sumitomo Electric Industries, Ltd., Osaka-shi, Osaka 541-0041 (JP)
(72) Inventor: Konda, Hideya, Sakae-ku Yokohama-shi Kanagawa (JP)
(74) Representative: HOFFMANN EITLE

(57) **Abstract**

A digital video signal interface module that can suppress an increase in connection losses while allowing transmission of high-resolution digital images and requires less space on the backside is provided. The module includes (1) a transmission side interface unit that has an EO converter that converts digital video signals to optical signals, a first connector, and a first optical fiber that connects the EO converter and the first connector, (2) a reception side interface unit that has an OE converter which converts the optical signal to an electric signal, a second connector, and a second optical fiber that connects the OE converter and the second connector, and (3) a cable unit that has a third optical fiber and connects the transmission side interface unit and the reception side interface unit, wherein the numerical aperture of the first optical fiber is smaller than the that of the third optical fiber.

## Description

### BACKGROUND OF THE INVENTION

### 1. Field of the Invention

The present invention relates to a digital video signal interface module for transmitting digital video signal output from a host device to a video output display device.

### 2. Description of the Background Art

In recent years, display devices such as liquid crystal displays and plasma display panels, and display devices which use projectors or the like have been becoming larger in size. Furthermore, transmission of high quality images has become possible by digitizing video signal, and these video output display devices are used not only as television receivers, but also as display means for various types of information transmission, for instance as monitors in advertising, medical equipment, trains or department stores or the like.

Signal transmission between these types of display devices and the host device (video signal source such as a computer, display controller, or the like) is primarily performed by a system which uses the Digital Visual Interface (DVI) standard, which allows transmission of signals in digital format without converting digital signals into analog signals. Furthermore, this DVI system also includes functions such as a Display Data Channel (DDC) function, which transmits display device information to the host device to perform plug-and-play, and a Hot Plug Detect (HPD) function, which checks, for instance, whether the display device has been plugged off from the host device while the power is on.

Display devices are increasingly used in a location away from the host device because of the diversification of applications and the greater size of the display devices. However, when metal cable is used to transmit digital signals between the display devices and the host device, the cable length is restricted to 5 m or less, for example, because of attenuation and reflection of the video signal. Therefore, Japanese Patent Application publication No. 2002-366340 (corresponding U.S. Patent Application Publication No. 2003034963 A1) discloses a technology that allows relatively cheap transmission over long distances by using optical fiber for the transmission of high frequency digital video signals in the range of several hundred MHz to several GHz (which include red, green, blue, and clock signals), and using metal wires for the transmission of DDC signals and HPD signals which use the frequency of 400 kHz or less.

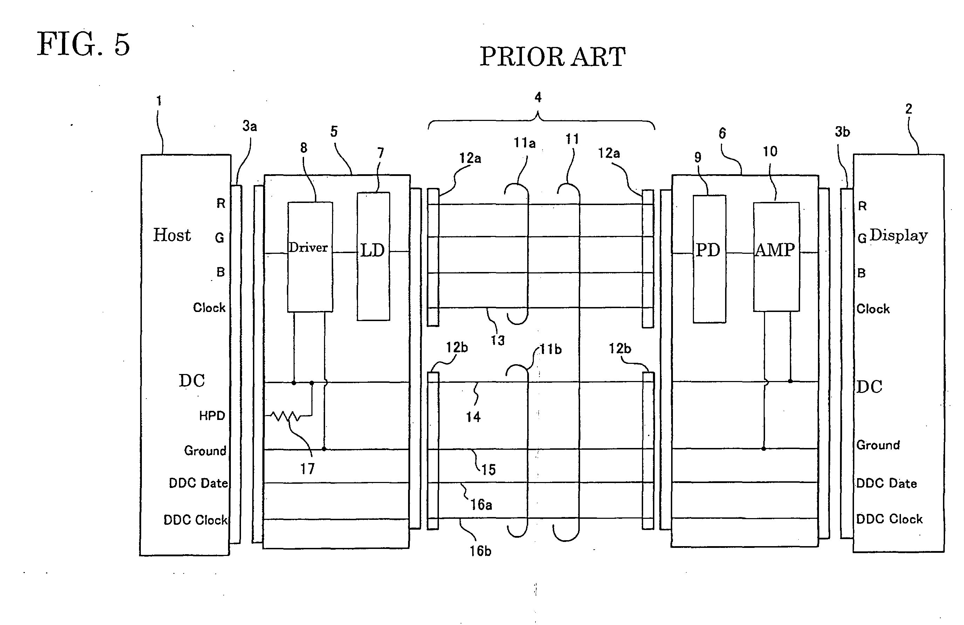

Figure 5 is a block diagram which describes a conventional digital video signal interface module. The transmission side of the interface module has a transmission side interface unit (transmission unit) 5 which is connected to a DVI receptacle 3a on a host device 1. The reception side of the module has a reception side interface unit (reception unit) 6 connected to a DVI receptacle 3b on a video output display device 2. The DVI receptacles 3a, 3b are receptacles which have been designed to meet the DVI system requirements. The DVI receptacles 3a, 3b include, in addition to terminals for digital video signal transmission (R, G, B, and Clock), a power supply terminal and a ground terminal. The DVI receptacles 3a, 3b further include a DDC clock signal terminal, a DDC data signal terminal, and an HPD terminal and the like, which transmit information regarding the reception side display device 2 to the transmission side host device 1.

The transmission side unit 5 has an EO converter (light emitter unit 7 such as a semiconductor laser, and a driver 8) for converting digital video signals from the host device 1, which are electric signals, into optical signals and transmitting the signals. The reception unit 6 has an OE converter (light receptor unit 9 such as a photo diode, and an amplifier circuit device 10) for restoring the digital signal received as an optical signal to an electric signal. The transmission side unit 5 and the reception unit 6 are connected by a cable unit 4.

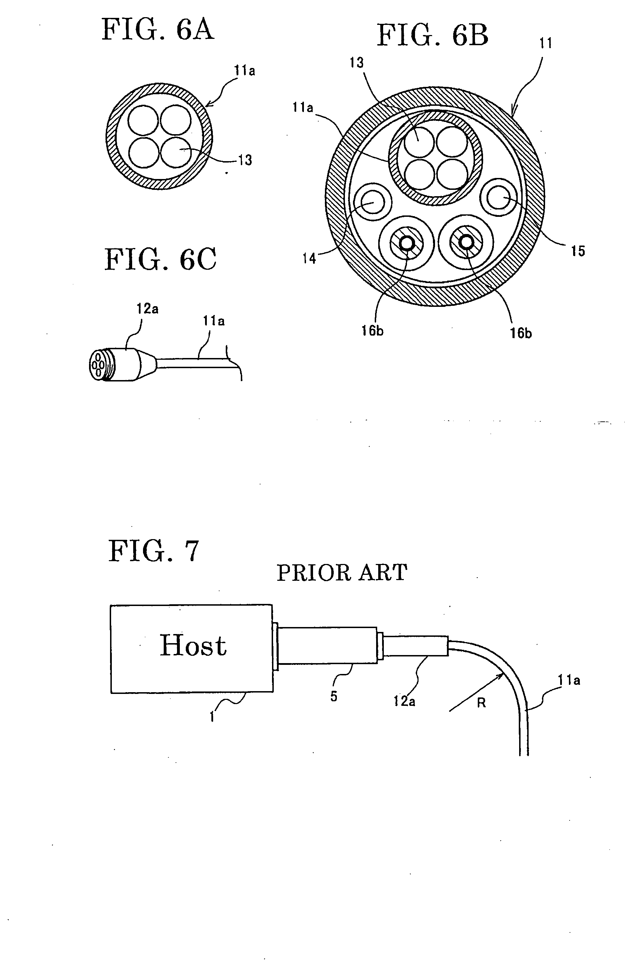

The cable unit 4 includes an optical fiber cable 11a and a metal cable 11b. Figs. 6A-6C are schematic drawings showing an example of a cable unit which is used by the digital video signal interface module. Figure 6A is a cross sectional view of an optical fiber cable, Fig. 6B is a cross sectional view of a composite cable, and Fig. 6C is a partial perspective view of the terminal of the optical fiber cable.

The optical fiber cable 11a has at least four optical fibers (third optical fibers 13) for transmitting digital video signals that are contained within the same outer sheath. The optical fiber cable 11a also has optical connectors 12a which are attached at both ends. The metal cable 11b has a power supply line 14, a ground line 15, and DDC signal lines 16a, 16b, and electrically connects the transmission side and the reception side separately from the optical fiber cable 11a. Note that the optical fiber cable 11a and the metal cable 11b can be contained in the same outer sheath and form a composite cable 11. Also, optical connectors 12a and metal connectors 12b can be attached to both ends of this cable to form a cable unit 4.

A power supply line 14 and a ground line 15 are connected to the respective power terminal and ground terminal of the DVI receptacle 3a on the host device 1 side. Furthermore, the power supply line 14 and the ground line 15 are also connected to the respective power terminal and ground terminal of the DVI receptacle 3b on the display device 2 side, and a direct current of + 5V is supplied from the host device 1 side to the display device 2. The display device 2 has, for example, Electrically Erasable and Programmable ROM (EEPROM), which is a type of nonvolatile memory that can store information such as image resolution information and the refresh rate or the like. Furthermore, the power supplied from the host device 1 side through the power supply line 14 is utilized to drive the EEPROM. Furthermore, the HPD signal can be retrieved by the host device 1 from the power supply line 14 through a resistor 17.

The power supply line 14 and the ground line 15 are also connected to a drive circuit device (Driver 8) in the transmission side unit 5 and an amplifier circuit device 10 in the reception unit 6, and can provide operating power thereto with the excess power not used by the display device 2. Note that the metal cable 11b may be directly connected to the host device 1 and the display device 2 without passing through the transmission side unit 5 and the reception unit 6. In such case, a separate external power supply is provided as a power supply for the transmission side unit 5 and the reception unit 6.

Figure 7 is a schematic view of an application of a conventional digital video signal interface module. When a conventional digital video signal interface module is connected between a host device 1 and a display device 2, a large space is required on the backside of either the host device 1 or the display device 2. For instance, the permissible bending radius R of the optical fiber cable 11a, which contains 4 strands of third optical fibers 13, is approximately 5 cm, the axial length of the optical connector 12a is approximately 3 cm, and the axial length of the transmission side unit 5 is approximately 7 cm. Therefore, a space with a depth of approximately 15 cm is necessary. This space requirement becomes restrictive when installing the interface module, and inconveniences the use of the interface module.

In transmission of video signal that uses optical fiber, the dispersion properties of the optical fiber restrict the transmission speed under a constant transmission distance, and the transmission distance is restricted under a constant transmission speed. If a laser diode is used as the light emitter, since the width of the wavelength spectrum of the transmission light is narrow, so material dispersion will be negligible in magnitude in the dispersion properties of the fiber. Accordingly, mode dispersion becomes dominant in the dispersion properties of the fiber. The transmission waveform distortion caused by the mode dispersion increases as the number of propagation modes increases. Therefore, in a video signal transmission system using optical fiber, long distance transmission of large-screen high-resolution video signal will be hindered if the number of propagation modes is greater.

When an optical fiber having a small core diameter is used as the third optic fiber 13, it is possible to increase the transmission speed, since the number of propagation modes becomes smaller in proportion to the square of the core diameter. On the other hand, higher precision is required for optical axes alignment, and therefore a high precision connector is necessary. Alternatively, it is possible to insert a lens between the light emitter/receptor and the optical fiber and excite the optical fiber with light whose angle of incidence is smaller than the inherent numerical aperture of the optical fiber, and thus suppress the number of propagation modes. The numerical aperture of the optical fiber is an index that indicates the capability of the optical fiber to collect light. Where the refractive index of the optical fiber core is n₁, and the difference between the relative refractive indices of the core and the cladding is Δ, the numerical aperture can be expressed approximately as "*n*_{1√}2Δ". However, since this method requires additional costs for the material of the lens itself, as well as the processing costs for installing the lens with precision, this method is not practical.

### SUMMARY OF THE INVENTION

An object of the present invention is to provide a digital video signal interface module which requires only a small space on the backside of the device, suppresses an increase in connection losses, and is able to transmit high-resolution digital images.

In order to achieve the aforementioned object, the present invention provides: (1) a transmission side interface unit which has an EO converter that converts a digital video signal to an optical signal, a first connector, and a first optical fiber that connects the EO converter and the first connector; (2) a reception side interface unit which has an OE converter that converts the optical signal to an electric signal, a second connector, and a second optical fiber that connects the OE converter and the second connector; and (3) a cable unit which has a third optical fiber and connects the transmission interface unit and the reception interface unit, wherein the numerical aperture of the first optical fiber is smaller than the numerical aperture of the third optical fiber.

### BRIEF DESCRIPTION OF THE DRAWINGS

These and other features, aspects, and advantages of the present invention will become better understood with regard to the following description, appended claims, and accompanying drawings. In the figures of the accompanying drawings, like reference numerals refer to similar elements.
Figure 1A is a schematic view of an embodiment of a digital video signal interface module according to the present invention, and Fig. 1B is a perspective view of the same;
Figure 2 is a block diagram which describes a first embodiment of the digital video signal interface module of the present invention;
Figure 3 is a block diagram which describes a second embodiment of the digital video signal interface module of the present invention;
Figure 4 is a block diagram which describes a third embodiment of the digital video signal interface module of the present invention;
Figure 5 is a block diagram describing a conventional digital video signal interface module;
Figures 6A to 6C are schematic views showing an example of a cable unit which is used by a digital video signal interface module, wherein Fig. 6A is a cross-sectional view of an optical fiber cable, Fig. 6B is a cross-sectional view of a composite cable, and Fig. 6C is a partial perspective view including the terminal of an optical fiber cable; and
Figure 7 is a schematic view of an application of a conventional digital video signal interface module.
Figures 8A to 8C are cross-sectional views of a first to third optical fiber respectively used in an embodiment of a digital video signal interface module according to the present invention.

### DETAILED DESCRIPTION OF THE INVENTION

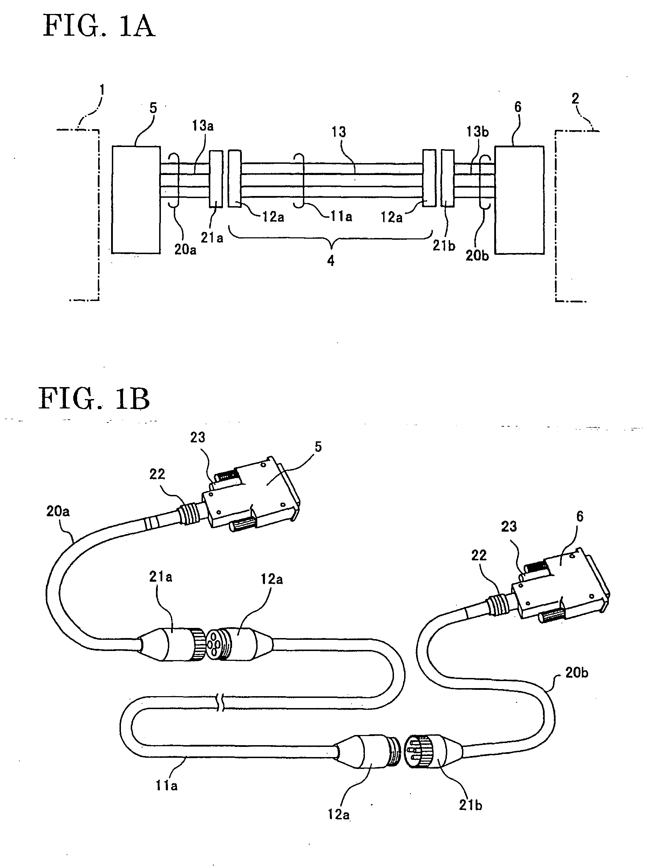

Figure 1A is a schematic view of an embodiment of a digital video signal interface module according to the present invention. The digital video signal interface module of this embodiment includes a transmission side unit 5 connected to a host device 1, a reception unit 6 connected to a display device 2, and a cable unit 4 that connects the transmission side unit 5 and the reception unit 6. The cable unit 4 is made by attaching optical connectors 12a to both ends of an optical fiber cable 11a, which has at least 4 strands of optical fiber (third optical fiber 13).

The transmission side unit 5 is provided with a first fiber cable 20a which contains at least four strands of optical fiber (first optical fiber 13a). Furthermore, the reception unit 6 is similarly provided with a second fiber cable 20b which contains at least four strands of optical fiber (second optical fiber 13b). First ends of the first optical fiber cable 20a and the second optic fiber cable 20b are connected to optical connectors (first connector 21a and second connector 21b) that form an optical connection with the optical connectors 12a of the cable unit 4. The second ends are directly fixed to the transmission side unit 5 and the reception unit 6.

Figure 1B is a perspective view of an embodiment of a digital video signal interface module. The transmission side unit 5 and the reception unit 6 are formed as a plug connector, which can be attached to and detached from the receptacles of the host device 1 and the display device 2. The first optical fiber cable 20a and the second optical fiber cable 20b directly extend from the backside of the transmission side unit 5 and the reception unit 6, while being covered by boots 22. Furthermore, if necessary, a power supply terminal 23 is provided to supply external power.

One of the optical connector 12a and the first connector 21a and one of the optical connector 12a and the second connector 21b should be male connectors, while the other of the optical connector 12a and the first connector 21a and the other of the optical connector 12a and the second connector 21b should be female connectors. Furthermore, although four strands of optical fiber and a four-strand optical connector are shown in Fig. 1A, the number of strands of optical fiber can be suitably increased or decreased. Furthermore, when a composite cable which includes a metal line in the cable unit 4 is to be used, a composite cable such as one shown in Fig. 6B and composite connectors having optical connectors and electrical connectors connected to the ends of the cable can be used.

By connecting a cable unit through an optical fiber that protrudes from the transmission unit and the reception unit, the space required on the backside of the host device and the display device can be reduced. Specifically, if the permissible bending radius of the optic fiber cable is R, the first optical fiber cable 20a and the second optical fiber cable 20b, which are connected to the transmission side unit 5 and the reception unit 6, can be bent 90° by making the length of the first optical fiber cable 20a or the second optical fiber cable 20b to no less than 1/4 of the circumference of the circle of radius R. Therefore, the interface module can be installed if there is a space greater than or equal to the length of R behind the edge surface of these units. In other words, compared to the case where a conventional digital video signal interface is used as shown in Fig. 7, the interface module of the present invention occupies less space corresponding to the axial length of the optical connector 12a.

The host device 1 and the display device 2 are usually set up within a relatively short distance of several hundred meters or less. Therefore, it is advantageous to use optical fibers with a core radius larger than quartz glass fiber, which has a core radius of around 10 micrometers, as the optical fiber for the digital video signal interface module, because aligning the optical axes can be simplified and connection losses can be reduced.

Therefore, the cable unit 4 may use a Graded Index type hard plastic clad fiber (HPCF), in which a glass core having a diameter of 200 micrometers covered on the outside with plastic having an outer diameter of 230 micrometers. This optical fiber has a large core diameter, and therefore has good optical connection efficiency with the light emitter/receptor units. This optical fiber can minimize connection losses, and is inexpensive.

With the present invention, the numerical aperture of the first optical fiber is set to be smaller than the numerical aperture of the third optic fiber 13. Therefore, the increase in the number of propagation modes is suppressed, and the mode dispersion is alleviated, thereby preventing a reduction in the transmission speed, which is caused due to the use of a large diameter core. Accordingly, degradation in the image resolution can be suppressed. It is preferable that the numerical aperture of the third optical fiber 13 be less than or equal to the numerical aperture of the second optic fiber 13b, in other words, that the numerical aperture of the optical fibers be set to increase in the direction of optic signal transmission.

In addition, the core diameter of the third optical fiber 13 is preferably larger than the core diameter of the first optical fiber 13a, and less than or equal to the core diameter of the second optical fiber 13b. Thereby, even if the alignment of the optical fiber axes with the first connector 21a and the optical connector 12a is not precise, the optical signal transmitted from the first optical fiber 13a can be received by the third optical fiber 13 efficiently. Similarly, even if the alignment of the optical fiber axes with the optical connector 12a and the second connector 21b is not precise, the optical signal transmitted by the first third fiber 13 can be received by the second optical fiber 13b efficiently, and losses caused by light leaking can be minimized. As a result, high precision optical axes alignment is not necessary, so the machining precision of the optical connector can be relaxed, which will lead to a reduction in component costs.

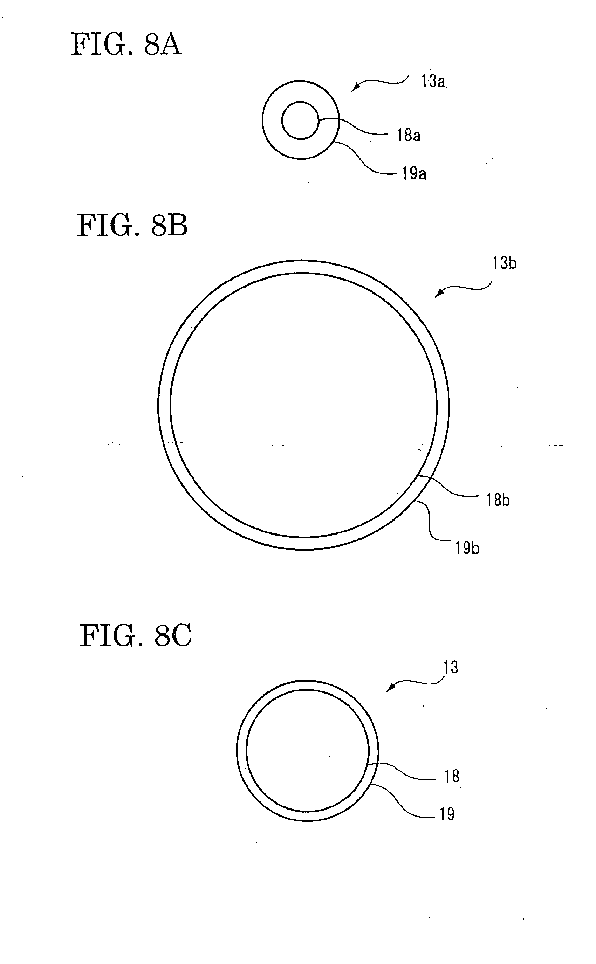

Figures 8A to 8C are cross-sectional views of a first to third optical fiber respectively used in an embodiment of a digital video signal interface module according to the present invention. The first optical fiber 13a has a core 18a and a cladding 19a. The second optical fiber 13b has a core 18b and a cladding 19b. The third optical fiber 13 has a core 18 and a cladding 19.

The first optical fiber 13a is preferably a multimode optical fiber with a core diameter of either 50 micrometers or 62.5 micrometers, the second optical fiber 13b is preferably a hard plastic clad optical fiber with a core diameter of 200 micrometers or a plastic fiber with a core diameter of between 400 and 1000 micrometers, and the third optical fiber 13 is preferably a hard plastic clad optical fiber with a core diameter of 200 micrometers. For instance, optical fibers No. 1 through No. 5 shown in the Table are commonly used fibers. Thus, by using these optic fibers, there is no need to design and manufacture new optic fibers, and a digital video interface module with a relatively low cost can be achieved.

**Table**

| Fiber No. | Core diameter µm | Numerical aperture | Cladding diameter µm | Material | Application |
|---|---|---|---|---|---|
| 1 | 50 | 0.2 | 125 | Silica glass | Optic fiber 13a |
| 2 | 62.5 | 0.25 | 125 | Silica glass | Optic fiber 13a |
| 3 | 200 | 0.4 | 230 | HPCF | Optic fiber 13, 13b |
| 4 | 980 | 0.5 | 1000 | POF (PMMA) | Optic fiber 13b |
| 5 | 440 | 0.5 | 480 | POF (PC) | Optic fiber 13b |

| | | | | | |
|---|---|---|---|---|---|
| POF: plastic optical fiber | | | | | |
| PMMA: polymethyl methacrylate, PC: polycarbonate | | | | | |

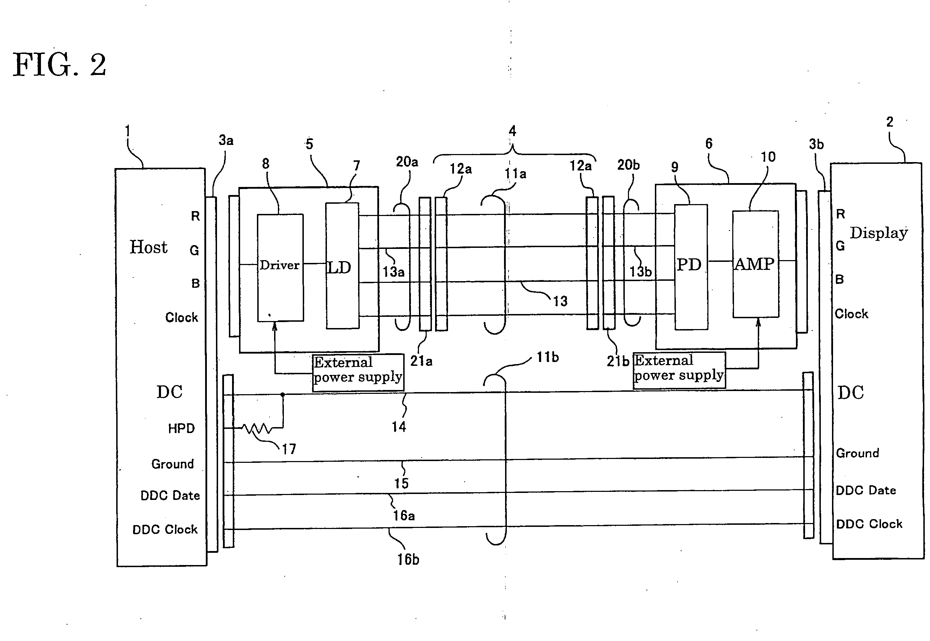

Figure 2 is a block diagram which describes a first embodiment of the digital video signal interface module of the present invention. In this first embodiment, the digital video signal is split to a transmission optical fiber cable 11a and a metal cable 11b.

The transmission side of the module includes the transmission side unit 5 that is connected to the DVI receptacle 3a provided on the host device 1. The transmission side unit 5 has an EO converter (light emitter unit such as a semiconductor laser 7, and a driver 8) for converting digital video signals from the host device 1, which are electric signals, into optical signals and transmitting the signals. The transmission side unit 5 has also a first optical fiber cable 20a for outputs. First ends of the first optical fibers 13a of the first optical fiber cable 20a are optically connected to the laser diode 7, and an optical connector (first connector 21a) is attached to the second ends.

The reception side of the module includes a reception unit 6 which is connected to a DVI receptacle 3b on a display device 2. The reception unit 6 has an OE converter (light receptor unit such as a photo diode 9, and an amplifier circuit device 10) for restoring the digital signal received as an optical signal to an electric signal. The reception unit 6 has also a second optical fiber cable 20b for inputs. First ends of the second optical fibers 13b of the second optical fiber cable 20b are optically connected to the photo diode 9, and an optical connector (second connector 21b) is attached to the second ends.

The optical signal output from the laser diode 7 is transmitted to the third optical fibers 13 through the first optical fibers 13a and the first connector 21a. The optical signal which propagates in the third optical fiber 13s is received by the photo diode 9 through the second connector 21b and the second optical fibers 13b.

In the first embodiment, the metal cable 11b is directly connected to the DVI receptacle 3b of the video output device 2 and to the DVI receptacle 3a of the host device 1 without passing through the transmission side unit 5 and the reception unit 6. Therefore, an external power supply is used for the operating power of the transmission side unit 5 and the reception unit 6.

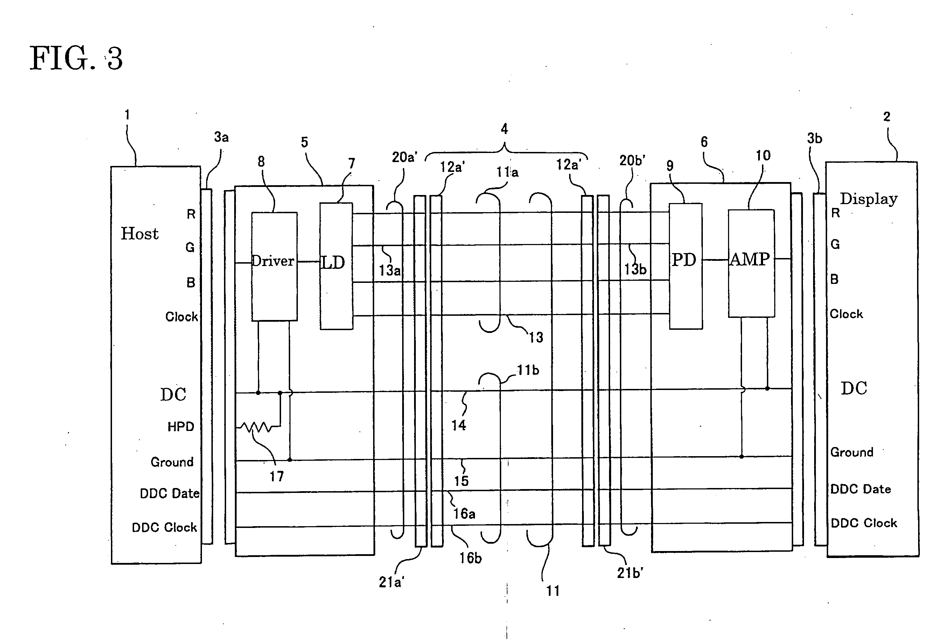

Figure 3 is a block diagram which describes a second embodiment of the digital video signal interface module of the present invention. In this second embodiment, the cable unit 4 is formed of a composite cable 11 which integrates an optical fiber cable 11a and a metal cable 11b.

The composite cable 11 can the one shown in Fig. 6B. In addition to the metal cable 11b used for the power supply line 14, the ground line 15, and the DDC signal lines 16a, 16b, additional metal lines may be added if necessary. Note, if the cable length is long, the DDC signal lines 16a and 16b may be used at the frequency of 400 kHz at maximum, so a shielded electrical line is preferably used in order to reduce signal attenuation.

A first composite cable 20a' which integrates an optical fiber cable and a metal cable, protrudes from the transmission side unit 5. A second composite cable 20b' which integrates an optical fiber cable and a metal cable, protrudes from the reception unit 6. Composite connectors (first connector 21a', second connector 21b'), which include both an optical connector for the optical fiber connection and an electric connector for the metal wire connection, are attached to the first composite cable 20a' and the second composite cable 20b'. Furthermore, the cable unit 4 is also connected to composite connectors 12a', which include an optical connector and an electric connector. Therefore, an electrical connection can be established between the host device 1 and the display device 2 at the same time when the digital video signal paths are connected.

The composite connector may for instance have a construction as shown in Japanese Patent Application publication No. H5-114434, or Japanese Patent Application publication No. H8-211256 or US patent No. 5,109,452. The entire disclosure of US patent No. 5,109,452 are incorporated herein by reference. Note, with this construction, power supplied from the host device 1 or the display device 2 through the power supply line 14 and the ground line 15 can be used as the operating power supply for the transmission side unit 5 and the reception unit 6.

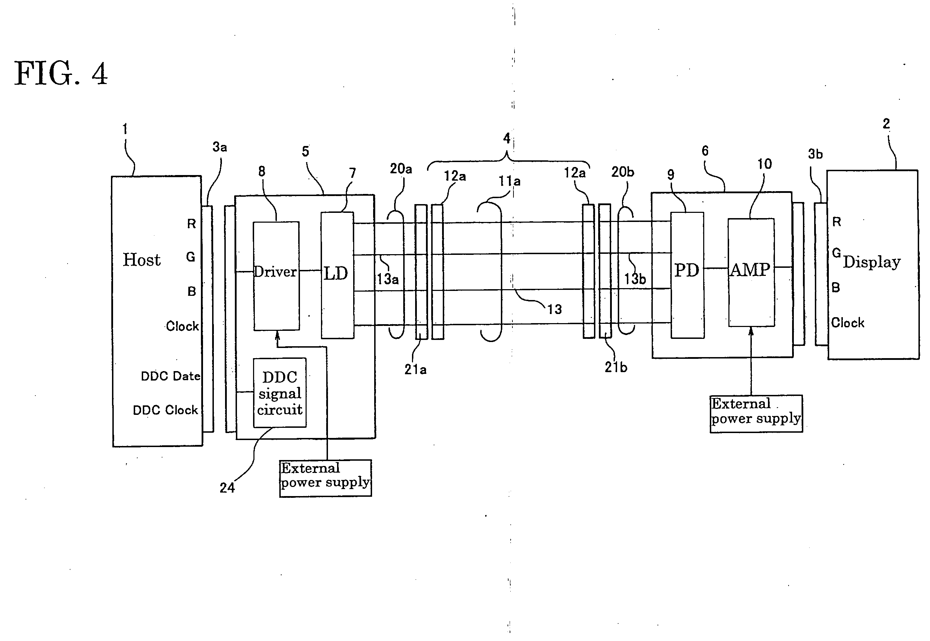

Figure 4 is a block diagram which describes a third embodiment of the digital video signal interface module of the present invention. The third embodiment has a simplified form which uses only a fiber cable without using metal wires. The metal wires used for the power supply line, the ground line, and the DDC signal line or the like in the digital video signal interface module of the first embodiment, are omitted. Only the first through third optical fibers 13, 13a, 13b, which transfer digital video signal between the transmission side unit 5 and the reception unit 6, are connected. Note, the power supply for the transmission side unit 5 and the reception unit 6 is obtained through an external power supply.

In the third embodiment, the transmission side unit 5 has a DDC signal circuit 24, which generates pseudo DDC signals. The host device 1 uses the pseudo DDC signal to recognize the display device 2 and outputs digital video signal based on this recognition information. In other words, transmission of a digital video signal can be performed in accordance with the DVI standard even based on transmission with only an optical fiber cable. With this arrangement, the cable unit 4 includes only an optical fiber cable 11a and an optical connector 12a, so the wiring is simplified, and the cable and connector structures are also simplified. Therefore, the system can be achieved at a low cost.

While this invention has been described in connection with what is presently considered to be the most practical and preferred embodiments, the invention is not limited to the disclosed embodiments, but on the contrary, is intended to cover various modifications and equivalent arrangements included within the spirit and scope of the appended claims.

The entire disclosure of Japanese Patent Application No. 2004-228974 filed on August 5, 2004 including specification, claims, drawings and summary are incorporated herein by reference in its entirety.

## Claims

1. A digital video signal interface module comprising:
a transmission side interface unit having an EO converter which converts a digital video signal to an optical signal, a first connector, and a first optical fiber which connects the EO converter and the first connector;
a reception side interface unit having an OE converter which converts the optical signal to an electric signal, a second connector, and a second optical fiber which connects the OE converter and the second connector; and
a cable unit which has a third optical fiber and connects the transmission side interface unit and the reception side interface unit,
wherein the numerical aperture of the first optical fiber is smaller than the numerical aperture of the third optical fiber.

2. The digital video signal interface module as claimed in claim 1, wherein
the numerical aperture of the third optical fiber is less than or equal to the numerical aperture of the second optical fiber.

3. The digital video signal interface module as claimed in claim 1 or claim 2, wherein
the respective first, second, and third optical fibers have a core and a cladding surrounding the core, the core diameter of the third optical fiber is greater than the core diameter of the first optical fiber, and less than or equal to the core diameter of the second optical fiber.

4. The digital video signal interface module as claimed in claim 3,
wherein
the first optical fiber is a multimode optical fiber with a core diameter of either 50 micrometers or 62.5 micrometers,
the second optical fiber is a hard plastic cladded optical fiber with a core diameter of 200 micrometers or a plastic fiber with a core diameter of between 400 and 1000 micrometers, and
the third optical fiber is a hard plastic cladded optical fiber with a core diameter of 200 micrometers.
